# EUROPÄISCHE PATENTSCHRIFT

(11) **EP 1 554 215 B1**
(45) Veröffentlichungstag und Bekanntmachung des Hinweises auf die Patenterteilung: **12.07.2006**
(21) Anmeldenummer: 03758043.8
(22) Anmeldetag: 22.10.2003
(51) Int. Cl.: B67C 3/22, B65B 31/00, B65B 31/04, A23L 2/54, B01F 3/04

(54) **VERFAHREN UND VORRICHTUNG ZUM ABFÜLLEN EINES GETRÄNKS IN EINEN GETRÄNKEBEHÄLTER**
METHOD AND DEVICE FOR FILLING A CONTAINER WITH A DRINK
PROCEDE ET DISPOSITIF POUR REMPLIR UN RECIPIENT AVEC UNE BOISSON

(30) Priorität: 23.10.2002 DE 10249399; 23.10.2002 DE 20216342 U; 18.09.2003 DE 10343283
(43) Veröffentlichungstag der Anmeldung: 20.07.2005
(73) Patentinhaber: Adelholzener Alpenquellen GmbH, 83313 Siegsdorf (DE)
(72) Erfinder: KROPF, Rudolf, 83359 Hallabruch/Hufschlag (DE); MARQUARDT, Volker, 83346 Bergen (DE)
(74) Vertreter: Herzog, Markus
(86) Internationale Anmeldenummer: PCT/EP2003/011709
(87) Internationale Veröffentlichungsnummer: WO 2004/037706

(56) Entgegenhaltungen:
- EP-A- 0 421 597
- EP-A- 1 034 703
- DE-U- 20 101 692

## Beschreibung

Die Erfindung betrifft ein Verfahren zum Abfüllen eines aus einer Ausgangsflüssigkeit hergestellten Getränks mit darin gelöstem Gas in einen Getränkebehälter, gemäß dem Oberbegriff des Anspruchs 1.

Ein derartiges Verfahren ist beispielsweise aus der DE-U-201 01 692 bekannt. Diese beschreibt ein Verfahren, bei welchem mit Sauerstoff unter Druck angereichertes Wasser in eine Getränkeflasche abgefüllt wird. Wie dies allgemein üblich ist, wird auch bei diesem Verfahren der Getränkebehälter nicht vollständig bis zur Oberkante seiner Öffnung befüllt, sondern es verbleibt zwischen dem Flüssigkeitsspiegel des in den Getränkebehälter eingefüllten Getränks und dem Rand der Öffnung des Getränkebehälters ein Restgasvolumen. Bei mit Sauerstoff angereicherten Getränken ist dies mit dem Nachteil verbunden, dass ein Teil des im Getränk gelösten Sauerstoffs sich aufgrund der unterschiedlichen Sauerstoff-Partialdrücke im Getränk einerseits und dem Restgasvolumen andererseits entbindet und dadurch der Sauerstoffgehalt im Getränk abnimmt. Daher muss zur Erzielung eines bestimmten Sauerstoffgehalts im Getränk üblicherweise eine entsprechend größere Menge an Sauerstoff im Getränk gelöst werden, um dadurch diese Verluste in das Restgasvolumen auszugleichen. Dabei ist insbesondere zu beachten, dass die in dem Getränk gelöste Menge an Sauerstoff bei Ablauf des Mindesthaltbarkeitsdatums zumindest der auf dem Etikett des Getränkebehälters deklarierten Menge an gelöstem Sauerstoff entsprechen muss. Die vorstehend erwähnte unerwünschte Entbindung des Sauerstoffs ist besonders bei den von den Verbrauchern geschätzten Kunststoffflaschen von Nachteil, da bei diesen ein im Vergleich zu Glasflaschen größeres Restgasvolumen vorhanden ist.

Im Stand der Technik sind ferner Verfahren zum Abfüllen eines Getränks in einen Getränkebehälter bekannt, bei denen das Restgasvolumen durch Zuführen einer vorbestimmten Menge flüssigen Stickstoffs unter Druck gesetzt wird. Hierzu sei beispielsweise auf die EP-B-0 481 019 und die EP-B-0 854 089 verwiesen. Die Zufuhr flüssigen Stickstoffs in das Restgasvolumen wird insbesondere bei der Abfüllung von Bieren oder Fruchtsäften verwendet. Das Zuführen des flüssigen Stickstoffs dient dabei dazu, den im Restgasvolumen vorhandenen Sauerstoff aus dem Behälter zu verdrängen, bevor der Behälter verschlossen bzw. abgedichtet wird. Das Vorhandensein von Sauerstoff im Restvolumen ist unerwünscht, da das Getränk, und insbesondere die dessen Geschmack ausmachenden Inhaltsstoffe oxidationsanfällig sind. Darüber hinaus begünstigt der Sauerstoff das Wachstum von Mikroorganismen, welche beispielsweise bei alkoholhaltigen Getränken zur Veresterung des Getränks führen können.

Aus der DE-C-34 19 855 ist in diesem Zusammenhang ferner eine Vorrichtung zur Abgabe eines ununterbrochenen Strahls einer kryogenen Flüssigkeit, insbesondere von flüssigem Stickstoff, bekannt.

Aus der EP-A-0 421 597 ist ein Verfahren zum Abfüllen eines aus einer Ausgansflüssigkeit hergestellten Getränks mit darin gelöstem gas in einen Getränkebehälter gemäss dem Oberbegriff des Anspruchs 1 bekannt.

Demgegenüber ist es Aufgabe der vorliegenden Erfindung, ein Verfahren der eingangs genannten Art anzugeben, bei welchem die unerwünschte Entbindung des in dem Getränk gelösten Gases, insbesondere Sauerstoffs, zumindest deutlich reduziert, wenn nicht gar vollständig unterbunden ist.

Diese Aufgabe wird erfindungsgemäß die Merkmale in Kennzeichnungsteil des Anspruchs 1 gelöst.

Nach dem Zuführen der vorbestimmten Menge flüssigen Sauerstoffs in den Getränkebehälter beginnt der flüssige Sauerstoff zu verdampfen. Der so entstehende gasförmige Sauerstoff verdrängt das in dem Restgasvolumen vorhandene Gas und stellt so in dem Restgasvolumen eine idealerweise im Wesentlichen vollständig aus Sauerstoffgas bestehende Atmosphäre her. Nach dem Abdichten bzw. Verschließen der Behälteröffnung führt die weitere Verdampfung des flüssigen Sauerstoffs zu einer Druckerhöhung in dem Restgasvolumen und somit in dem gesamten Getränkebehälter. Auf diese Weise herrscht in dem Restgasvolumen ein so hoher SauerstoffPartialdruck, dass eine unerwünschte Entbindung des in dem Getränk gelösten Sauerstoffs zumindest erschwert, wenn nicht gar vollständig verhindert ist.

Je nach dem Volumen des Getränkebehälters kann die vorbestimmte Menge flüssigen Sauerstoffs mindestens etwa 0,1 ml, vorzugsweise zwischen etwa 0,1 ml und etwa 3,0 ml, bevorzugter zwischen etwa 0,1 ml und etwa 1,5 ml, noch bevorzugter zwischen etwa 0,1 ml und etwa 1,0 ml, betragen. In diesem Zusammenhang sei darauf hingewiesen, dass 1 kg flüssiger Sauerstoff einem Volumen von 0,867I flüssigen Sauerstoffs oder nach Verdampfen einem Volumen von 0,747 m³ gasförmigen Sauerstoffs entspricht. Während herkömmlich befüllte PET-Flaschen mit einem sauerstoffhaltigen Getränk nach dem Verschließen einen Druck von etwa 2,5 bar bis 3,0 bar aufweisen, weist der erfindungsgemäß befüllte Getränkebehälter bei Einleiten der vorstehend angegebenen Menge flüssigen Sauerstoffs, wie weiter unten noch näher erläutert werden wird, einen Druck von bis zu 7,0 bar auf. Somit weisen mit dem erfindungsgemäßen Verfahren befüllte Getränkebehälter einen erheblich höheren Innendruck auf als herkömmliche Getränkebehälter, und auch der Gehalt an im Getränk gelöstem Gas, insbesondere Sauerstoff, ist bei den nach dem erfindungsgemäßen Verfahren befüllten Getränkebehältern wesentlich höher als bei nach herkömmlichen Verfahren befüllten Getränkebehältern, und dies bei der gleichen Konzentration von ursprünglich, d.h. zum Zeitpunkt des Abfüllens des Getränks in den Getränkebehälter, in dem Getränk gelöstem Gas, insbesondere Sauerstoff.

Die erzielten Vorteile sind unabhängig von Flaschenvolumen, Flaschenform, Verschlusstyp und gewünschtem Sauerstoffgehalt im Getränk. D.h., die Vorteile sind sowohl mit Glasflaschen als auch mit Kunststoffflaschen, und hier sowohl bei Monolayer- als auch bei Multilayer-Kunststoffflaschen, als auch mit Metallflaschen, mit Kunststoffverschlüssen oder Metallverschlüssen, bei Verschlüssen mit oder ohne zusätzliche Dichteinlage und bei unterschiedlichen Formen des das Restgasvolumen aufnehmenden Halsbereichs der Flasche zu erzielen.

Die in den Getränkebehälter zuzuführende Menge flüssigen Sauerstoffs kann beispielsweise durch entsprechende Wahl der Öffnungszeit eines Ventils mit konstantem Durchlassquerschnitt bestimmt werden. Hat man beispielsweise in Eichversuchen die pro Zeiteinheit durch den konstanten Durchlassquerschnitt des Ventils hindurchströmende Menge flüssigen Sauerstoffs ermittelt, so genügt es, das Ventil für eine vorbestimmte Zeitdauer zu öffnen, um die gewünschte Menge flüssigen Sauerstoffs in den Getränkebehälter abzugeben. Die Taktung des Dosierventils, d.h. das Öffnen und Schließen des konstanten Durchlassquerschnitts kann besipielsweise in Abhängigkeit der Taktung der Befüllvorrichtung oder in Abhängigkeit der Ausgangssignale geeigneter Sensoren zum Erfassen des Vorhandenseins eines Getränkebehälters erfolgen. Der Durchlassquerschnitt des Ventils kann ohne Weiteres derart gewählt werden, dass in der durch den Takt der Befüllvorrichtung vorgegebenen, zur Verfügung stehenden Zeit die erforderliche Menge flüssigen Sauerstoffs in den Behälter eingeleitet werden kann.

Gibt die Befüllvorrichtung einen sehr hohen Arbeitstakt vor, d.h. steht zur Zugabe von flüssigem Sauerstoff nur wenig Zeit zur Verfügung, so kann es im Hinblick auf die zum Öffnen und Schließen des konstanten Durchlassquerschnitts des Ventils erforderlichen Schaltzeiten vorteilhaft sein, von der getakteten Zugabe auf eine kontinuierliche Zugabe von flüssigem Sauerstoff überzugehen. In diesem Fall kann die in den Behälter eingeleitete Menge flüssigen Sauerstoffs durch die von dem Dosierventil pro Zeiteinheit abgegebene Menge an flüssigem Sauerstoff und die Verweildauer der Behälteröffnung im Bereich des Sauerstoff-Strahls bestimmt werden. Dabei kann es erforderlich sein, den konstanten Durchlassquerschnitt durch geeignete Aufweitung oder Einengung an den von der Befüllvorrichtung vorgegebenen Takt anzupassen.

In der vorliegenden Erfindung wird der Sauerstoff erst kurz vor der Zufuhr in den Getränkebehälter in einem mit gasförmigem Sauerstoff und einer Kühlflüssigkeit, beispielsweise flüssigem Stickstoff, beschickten Wärmetauscher verflüssigt. Dieses erfindungsgemäße Verfahren hat sich vor allem im Hinblick auf die von flüssigem Sauerstoff ausgehenden Betriebsrisiken, insbesondere die Explosions- und Brandgefahr, als vorteilhaft erwiesen.

Das erfindungsgemäße Verfahren kann nicht nur dann mit Vorteil eingesetzt werden, wenn das in dem Getränk gelöste Gas Sauerstoff ist, sondern auch dann, wenn in dem Getränk ein Kohlendioxid-Sauerstoff-Gemisch gelöst ist. Das unerwünschte Entweichen bzw. Entbinden bzw. Ausgasen von Kohlendioxid stellt dabei in der Praxis ein geringeres Problem dar als das Ausgasen von Sauerstoff, da Kohlendioxid in dem Getränk üblicherweise in erheblich höherer Konzentration enthalten ist.

Beispielsweise kann das Kohlendioxid-Sauerstoff-Gemisch zwischen etwa 200 mg/l und etwa 500 mg/l, vorzugsweise zwischen etwa 200 mg/l und etwa 400 mg/l, Sauerstoff und zwischen etwa 1,0 g/l und etwa 4,0 g/l, vorzugsweise zwischen etwa 1,0 g/l und etwa 2,0 g/l, bevorzugter zwischen etwa 1,4 g/l und etwa 1,8 g/l, noch bevorzugter zwischen etwa 1,5 g/l und etwa 1,7 g/l, Kohlendioxid enthalten. Bei diesen Angaben wird auf den Zustand des Getränks unmittelbar nach dessen Abfüllung in den Getränkebehälter und Verschließen des Getränkebehälters Bezug genommen.

Um möglichst viel Sauerstoff in dem Getränk bzw. der Ausgangsflüssigkeit zur Herstellung des Getränks lösen zu können, hat es sich als vorteilhaft erwiesen, dass die Ausgangsflüssigkeit bereits mit Kohlendioxid angereichert worden ist, bevor sie mit Sauerstoff angereichert wird.

Dabei kann die Ausgangsflüssigkeit mit Kohlendioxid angereichert werden, ohne sie zuvor zu entgasen.

Grundsätzlich ist es jedoch ebenso möglich, die Ausgangsflüssigkeit mit einem vorgemischten Kohlendioxid-Sauerstoff-Gemisch anzureichern. Dieses Kohlendioxid-Sauerstoff-Gemisch kann beispielsweise zwischen etwa 2 Vol.-% und etwa 50 Vol.-% Sauerstoff und zwischen etwa 98 Vol.-% und etwa 50 Vol.-% Kohlendioxid enthalten, vorzugsweise etwa 25 Vol.-% Sauerstoff und etwa 75 Vol.-% Kohlendioxid. Diese Angaben für das Mischungsverhältnis beziehen sich dabei auf den Regelbetrieb der Anreicherungsvorrichtung, d.h. deren Betrieb nach Abschluss einer Einfahrphase der Anreicherung.

Unter "Entgasen" wird üblicherweise das gezielte Austreiben von in der Ausgangsflüssigkeit, beispielsweise Quellwasser, bereits natürlich gelöstem Gas, insbesondere Sauerstoff, verstanden, um einen definierten Grundzustand der Ausgangsflüssigkeit herzustellen. Dieses Entgasen ist bei der Herstellung von Bier, Fruchtsäften, Limonaden und dergleichen erforderlich, um in der Ausgangsflüssigkeit etwaig enthaltene Sauerstoffanteile auszutreiben, da diese, wie vorstehend bereits erläutert, zur Oxidation der Inhaltsstoffe, insbesondere der Geschmacksstoffe, führen können. Im Gegensatz hierzu wird unter "Ausgasen" ein nicht beabsichtigtes, aber toleriertes Entweichen bzw. Entbinden von in der Ausgangsflüssigkeit enthaltenem Gas verstanden. So kann es bei der vorstehend angesprochenen getrennten Anreicherung der Ausgangsflüssigkeit mit Kohlendioxid einerseits und Sauerstoff andererseits bei der Anreicherung mit Sauerstoff zu einem Entweichen bzw. Ausgasen von Kohlendioxid kommen. Dies kann jedoch toleriert werden, da Kohlendioxid, wie vorstehend erwähnt, in erheblich größerer Menge in der Ausgangsflüssigkeit gelöst werden kann.

Ferner sei darauf hingewiesen, dass man im Zusammenhang mit der Anreicherung der Ausgangsflüssigkeit mit einem Gas, beispielsweise Kohlendioxid oder Sauerstoff oder einem Kohlendioxid-Sauerstoff-Gemisch, auch von dem "Imprägnieren" der Ausgangsflüssigkeit mit dem Gas spricht.

Um das Aufnahmevermögen der Ausgangsflüssigkeit für darin zu lösendes Gas erhöhen zu können, wird in Weiterbildung der Erfindung vorgeschlagen, dass die Ausgangsflüssigkeit auf eine Temperatur zwischen etwa 3°C und etwa 9 °C, vorzugsweise etwa 6 °C, gekühlt wird, bevor sie mit Gas angereichert wird. Bei der Herstellung und Abfüllung angereicherten Wassers wird diese Temperatur bis zur Abfüllung in die Getränkebehälter im Wesentlichen beibehalten. Bei der Herstellung von mit Inhaltstoffen versetzten Getränken, beispielsweise Süßgetränken, kann es durch die Beimengung der Inhaltsstoffe zu einer geringfügigen Erwärmung der Ausgangsflüssigkeit kommen. Diese übersteigt aber üblicherweise einen Wert von etwa 2°C nicht.

Um in dem Getränkebehälter vor dessen Befüllung mit dem Getränk eine definierte Atmosphäre schaffen zu können, wird ferner vorgeschlagen, dass man den Getränkebehälter mit einem Inertgasgas, beispielsweise Kohlendioxidgas, vorspannt, bevor man ihn mit dem Getränk befüllt. Der Vorspanndruck des Inertgases kann dabei zwischen etwa 5,0 bar und etwa 8,0 bar, vorzugsweise zwischen etwa 6,5 bar und etwa 7,0 bar betragen.

Das Vorspannen des Getränkebehälters mit einem Inertgas hat gegenüber dem Vorspannen mit reinem Sauerstoffgas oder Sterilluft etliche betriebstechnische Vorteile. So sind beim Vorspannen mit reinem Sauerstoffgas besondere Brandschutzmaßnahmen zu treffen, während beim Vorspannen mit Sterilluft durch den hierfür erforderlich Einsatz von Kompressoren und Sterilfilter die Gefahr einer geschmacklichen Beeinträchtigung des Getränks bei einem Defekt der Kompressoren oder einer Verunreinigung der Sterilfilter, beispielsweise mit Mikroorganismen, besteht. Daher wird für den Gedanken des Vorspannens des Getränkebehälters mit einem Inertgas, insbesondere Kohlendioxidgas, unabhängiger Schutz angestrebt.

Wie vorstehend bereits erwähnt, kann die Ausgangsflüssigkeit im Wesentlichen Wasser umfassen. Dabei kommen sämtliche in der Mineral- und Tafelwasser-Verordnung (MTVO) erwähnten Wasser in Betracht, insbesondere Trinkwasser, Quellwasser, Tafelwasser, natürliches Mineralwasser und Heilwasser.

Ferner kann der Ausgangsflüssigkeit wenigstens ein Inhaltsstoff, zugesetzt werden. Als Inhaltsstoff kommt wenigstens ein Stoff aus der die folgenden Stoffen umfassenden Gruppe in Betracht: Zucker, Zuckeraustauschstoffe, Süßstoffe, Aromen, Chinin, Coffein, Taurin oder dergleichen aus Aminosäuren gebildete Stoffe, Nährstoffe, Farbstoffe, Pflanzen- und Kräuterextrakte, Milch- und Molkeprodukte, Alkohol, Fettsäuren, Substanzen aus Obst oder/und Gemüse oder/und Getreide, organische und anorganische Säuren, Verdickungsmittel, Emulgatoren.

Vorteilhafterweise wird dabei wenigstens ein sauerstoffresistenter Inhaltsstoff verwendet. Der Zusatz des wenigstens einen Inhaltsstoffs kann beispielsweise zwischen der Anreicherung der Ausgangsflüssigkeit mit Kohlendioxid und der Anreicherung mit Sauerstoff erfolgen.

Nach einem weiteren Gesichtspunkt betrifft die vorliegende Erfindung eine Vorrichtung zum Abfüllen eines aus einer Ausgangsflüssigkeit hergestellten Getränks mit darin gelöstem Gas in einen Getränkebehälter, gemäß Anspruch 16 und zur Durchführung des erfindungsgemäßen Verfahrens. Auch diese Abfüllvorrichtung löst die vorstehend angegebene Aufgabe.

Hinsichtlich der in den abhängigen Ansprüchen zu dieser Abfüllvorrichtung angegebenen Weiterbildungsmöglichkeiten und der mit diesen Weiterbildungsmöglichkeiten erzielbaren Vorteile sei auf die vorstehende Diskussion des erfindungsgemäßen Verfahrens verwiesen. Insbesondere kann eine nach dem isobarometrischen Füllprinzip arbeitende Befüllvorrichtung zum Einsatz kommen.

Die Erfindung wird im Folgenden an Ausführungsbeispielen anhand der beigefügten Zeichnung näher erläutert werden. Es stellt dar:
- Fig.1: ein schematisches Blockdiagramm zur Erläuterung des erfindungsgemäßen Verfahrens und des Aufbaus und Funktion der erfindungsgemäßen Vorrichtung gemäß einer ersten Ausführungsvariante;
- Fig.2: ein schematisches Blockdiagramm zur Erläuterung des erfindungsgemäßen Verfahrens und des Aufbaus und Funktion der erfindungsgemäßen Vorrichtung gemäß einer zweiten Ausführungsvariante; und
- Fig.3: eine schematische Darstellung eines nach dem erfindungsgemäßen Verfahren befüllten Getränkebehälters.

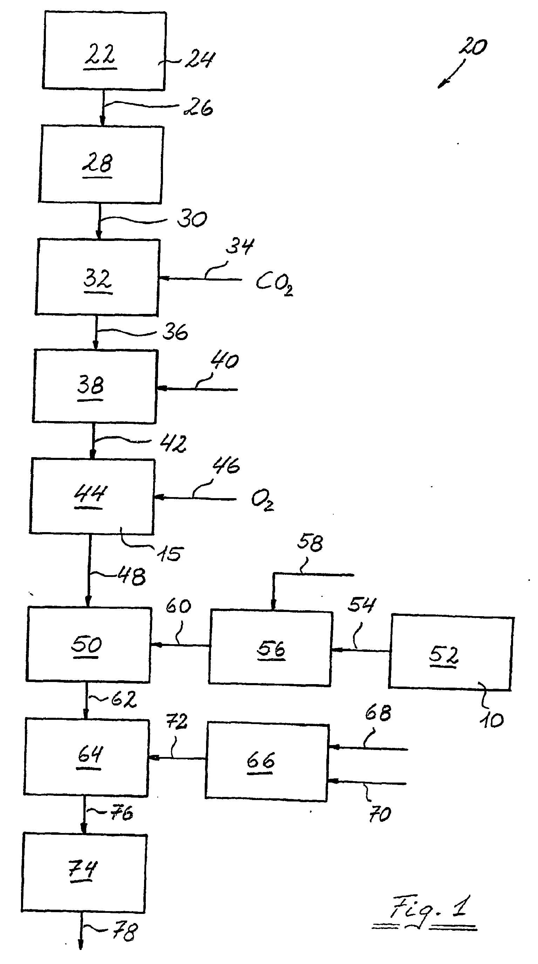

In Fig. 1 ist eine erfindungsgemäße Vorrichtung zum Herstellen und Abfüllen eines Getränks mit darin gelöstem Gas allgemein mit 20 bezeichnet.

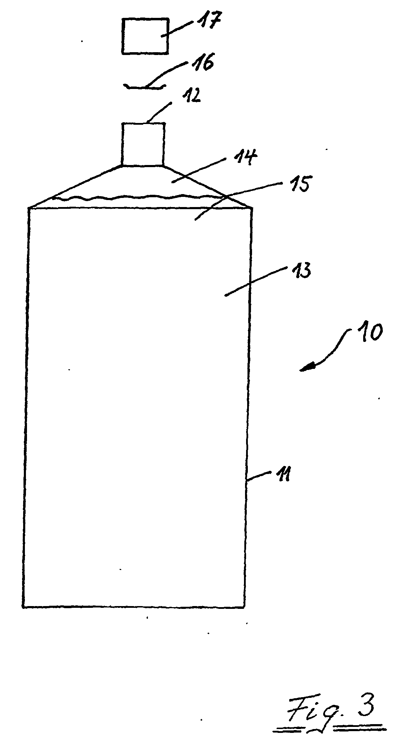

In einem Flüssigkeitsvorrat 22 wird eine Ausgangsflüssigkeit 24, beispielsweise natürliches Mineralwasser, zur Herstellung des Getränks 15 (siehe Fig. 3) bereitgestellt. Entsprechend kann der Flüssigkeitsvorrat 22 von der Quelle selbst oder einem Zwischenspeichertank gebildet sein. Über eine Leitung 26 wird die Ausgangsflüssigkeit 24 einer Kühlvorrichtung 28 zugeführt, in welcher die Ausgangsflüssigkeit 24 auf eine vorbestimmte Temperatur gekühlt wird.

Über eine weitere Leitung 30 wird die Ausgangsflüssigkeit anschließend zu einer Kohlendioxid-Anreicherungsvorrichtung 32 weitergeleitet, in welcher die Ausgangsflüssigkeit 24 mit Kohlendioxidgas versetzt bzw. imprägniert wird. Das Kohlendioxidgas wird der Anreicherungsvorrichtung 32 über eine Leitung 34 zugeführt.

Festzuhalten ist, dass die Ausgangsflüssigkeit 24 vor der KohlendioxidAnreicherung nicht entgast zu werden braucht. Eine derartige Entgasung hat üblicherweise den Sinn, etwaig in der Ausgangsflüssigkeit enthaltenen natürlichen Sauerstoff auszutreiben, damit dieser nicht die später der Ausgangsflüssigkeit noch zugesetzten Inhaltsstoffe, beispielsweise Geschmacksstoffe, beeinträchtigen, insbesondere oxidieren, kann. Da im vorliegenden Fall die Ausgangsflüssigkeit in einem nachfolgenden, noch zu beschreibenden Verfahrensschritt aber ohnehin noch mit Sauerstoff angereichert wird, kann die Entgasung vollständig entfallen.

Gewünschtenfalls wird die mit Kohlendioxid angereicherte Ausgangsflüssigkeit 24 über eine Leitung 36 in einen Mischer 38 geleitet, in welchem die Ausgangsflüssigkeit 24 mit Inhaltsstoffen vermischt wird, beispielsweise Sirup, Aroma- bzw. Geschmacksstoffen, Magnesiumcarbonat oder dergleichen Stoffen aus der eingangs aufgeführten Gruppe. Diese Inhaltsstoffe werden dem Mischer 38 über gemeinsam mit 40 bezeichnete Leitungen zugeführt. Alternativ kann die mit Kohlendioxid angereicherte Ausgangsflüssigkeit 24 aber auch gleich einer zweiten Anreicherungsvorrichtung 44 zugeführt werden.

Über eine Leitung 42 wird die mit Kohlendioxid angereicherte und gewünschtenfalls mit Inhaltsstoffen versetzte Ausgangsflüssigkeit dann in eine zweite Anreicherungsvorrichtung 44 eingeleitet, in welcher sie mit Sauerstoffgas angereichert bzw. imprägniert wird. Das Sauerstoffgas wird der Anreicherungsvorrichtung 44 über eine Leitung 46 zugeführt.

Das somit fertig hergestellte Getränk 15 wird nun über eine Leitung 48 einer Füllvorrichtung 50 zugeführt, in welcher es, vorzugsweise nach dem isobarometrischen Füllprinzip, in Getränkebehälter 10 (siehe Fig. 3) abgefüllt wird.

Um in dem Getränk 15 eine möglichst hohe Konzentration von darin gelöstem Sauerstoff erhalten zu können, ist es wichtig, dass der Verfahrensschritt der Sauerstoff-Anreicherung der letzte Verfahrensschritt vor der Abfüllung des Getränks 15 in die Getränkebehälter 10 ist und dass die Sauerstoffanreicherung unabhängig von den Verfahrensschritten der Kohlendioxidanreicherung und der Beimengung von Inhaltsstoffen erfolgt, d.h. in einem gesonderten Verfahrensschritt.

Obgleich es vorstehend als bevorzugt beschrieben worden ist, die Beimengung von Inhaltsstoffen nach der Kohlendioxidanreicherung durchzuführen, kann diese grundsätzlich auch vor der Kohlendioxidanreicherung erfolgen.

Die gereinigten Getränkebehälter 10 werden in einem Behältervorrat 52 bereitgestellt und von dort über eine Förderstrecke 54 zu einer Vorspanneinrichtung 56 gefördert. In der Vorspanneinrichtung 56 wird der Innenraum 13 (siehe Fig. 3) der Getränkebehälter 10 mit über eine Zuführleitung 58 zugeführtem Inertgas, beispielsweise Kohlendioxidgas gespült und auf einen vorbestimmten Druck vorgespannt.

Über eine weitere Förderstrecke 60 gelangen die so vorbereiteten Getränkebehälter 10 zur Füllvorrichtung 50, in welcher in jeden der Getränkebehälter 10 eine vorbestimmte Menge des Getränks 15 eingefüllt wird. Dabei verbleibt in dem Getränkebehälter 10 oberhalb des Getränks 15 ein Restgasvolumen 14 (siehe Fig. 3), in dem sich Kohlendioxidgas befindet. Dieses Restgasvolumen wird auch als Kopfraum des Getränkebehälters 10 bezeichnet.

Über eine weitere Förderstrecke 62 gelangen die befüllten Getränkebehälter 10 zu einer Station 64, in welcher eine vorbestimmte Menge flüssigen Sauerstoffs in den Getränkebehälter 10 eingeleitet wird. Unmittelbar nach dem Einleiten des flüssigen Sauerstoffs beginnt dieser zu verdampfen und verdrängt das Inertgas aus dem Restgasvolumen 14, so dass in diesem Restgasvolumen 14 eine im Wesentlichen reine Sauerstoffatmosphäre entsteht.

Der flüssige Sauerstoff kann beispielsweise in einer Verflüssigungsvorrichtung 66 erzeugt werden, beispielsweise einem Wärmetauscher, dem zum einen gasförmiger Sauerstoff über eine Zuführleitung 68 und flüssiger Stickstoff als Kühlmittel über eine Zuführleitung 70 zugeführt wird. Der in dem Wärmetauscher 66 verflüssigte Sauerstoff wird über eine Leitung 72 an die Station 64 weitergeleitet.

Unmittelbar nach dem Einleiten des flüssigen Sauerstoffs wird in einer Verschließvorrichtung 74 die Öffnung 12 des Getränkebehälters 10 mittels eines Deckels 17 verschlossen (siehe Fig. 3). Zwischen dem Deckel 17 und der Behälteröffnung 12 kann ferner eine Dichtungsscheibe 16 angeordnet sein, welche die Aufgabe hat, den gasdichten Abschluss des Getränkebehälters 10 weiter zu verbessern. Die Förderstrecke 76 zwischen der Station 64 und der Verschließvorrichtung 74 ist dabei derart bemessen, dass beim Verschließen der Behälteröffnung 12 noch nicht der gesamte, in der Station 64 in den Getränkebehälter 10 eingeleitete flüssige Sauerstoff verdampft ist. Vorzugsweise wird die Behälteröffnung 12 spätestens etwa 1 Sekunde nach dem Einleiten des flüssigen Sauerstoffs verschlossen. Selbstverständlich kann man zwischen dem Befüllen und Verschließen des Getränkebehälters auch eine längere Zeitdauer verstreichen lassen, sofern man dem Getränkebehälter nur eine ausreichende Menge flüssigen Sauerstoffs zuführt.

In diesem Zusammenhang sei darauf hingewiesen, dass das Sauerstoffgas, das aus dem flüssigen Sauerstoff bereits vor dem Verschließen des Getränkebehälters 10 durch Verdampfen gebildet wird, wichtige Spülfunktionen übernimmt. Zum einen verdrängt es die sich noch im Kopfraum 14 befindenden Reste des Inertgases und sorgt im Kopfraum 14 für eine im Wesentlichen reine Sauerstoffatmosphäre. Zum anderen spült das aus der Behälteröffnung 12 austretende Sauerstoffgas bei Annäherung des Deckels 17 dessen "topfartiges" Deckelvolumen, so dass auch durch den Deckel 17 keine unerwünschten Gase in den Kopfraum 14 verschleppt werden können. Dies ist insbesondere bei großvolumigen Verschlüssen von Vorteil, beispielsweise wiederverschließbaren Trinkverschlüssen, die auch im geöffneten Zustand mit dem Getränkebehälter verbunden bleiben, sogenannten "Sportscaps".

Festzuhalten ist jedoch, dass bei Einsatz eines Dichtungselements 16 dieses Spülen selbstverständlich nicht bzw. nur in einem geringeren Maße möglich ist. Auf Grund des Vorhandenseins des Dichtungselements 16 ist die Spülfunktion aber auch gar nicht erforderlich, da das Dichtungselement 16 ohnehin ein Einschleppen unerwünschter Gase in den Kopfraum 14 verhindert.

Nach dem Verschließen des Getränkebehälters 10 führt der restliche, dann noch verdampfende flüssige Sauerstoff zu einer Erhöhung des Drucks im Getränkebehälter 10. Da in dem Restgasvolumen 14 auf diese Weise eine im Wesentlichen reine Sauerstoffatmosphäre vorliegt, herrscht in diesem Restgasvolumen 14 ein Sauerstoffpartialdruck der so hoch ist, dass die Tendenz des in dem Getränk 15 gelösten Sauerstoffs zum Ausgasen aus dem Getränk 15 im Vergleich mit dem Stand der Technik zumindest reduziert, wenn nicht gar vollständig ausgeschlossen ist.

Aus der Verschließstation 74 gelangen die so befüllten Getränkebehälter über eine Förderstrecke 78 zu einer nicht dargestellten Verpackungsstation, in der sie in Getränkekisten oder dergleichen verpackt werden.

Die Getränkebehälter 10 können beispielsweise eine aus Glas oder Kunststoff, vorzugsweise PET, gefertigte Behälterwand 11 (siehe Fig. 3) aufweisen. Bei Kunststoffbehältem kann die Behälterwand 11 ferner entweder eine Monolayer-Struktur oder eine Multilayer- bzw. Mehrschicht-Struktur aufweisen.

Im Vergleich zur herkömmlichen Herstellung und Abfüllung von mit Sauerstoff und gewünschtenfalls Kohlendioxid angereicherten Getränken kann mit dem erfindungsgemäßen Verfahren und der erfindungsgemäßen Vorrichtung eine Erhöhung des Sauerstoffgehalts in dem fertig abgefüllten und verschlossenen Getränkebehälter um mindestens etwa 30% bis 35% erzielt werden.

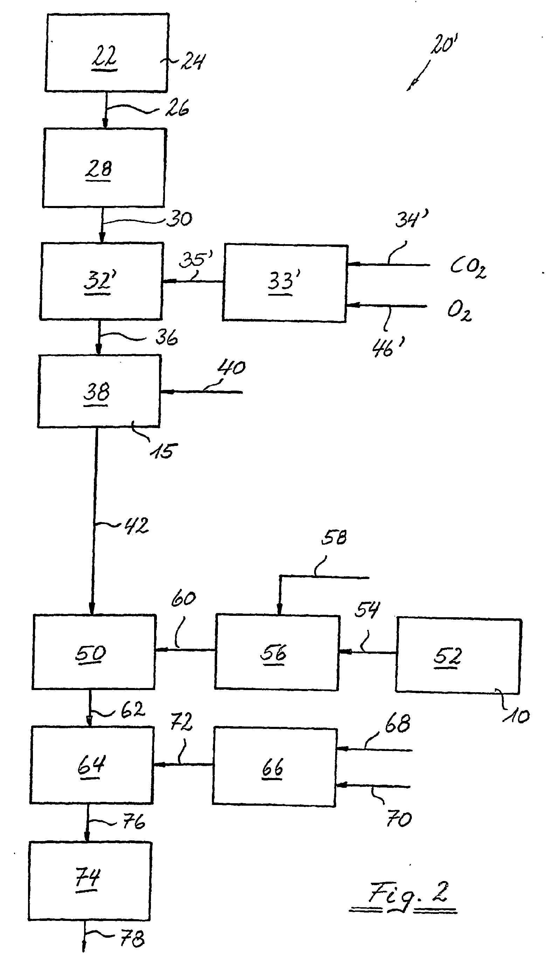

In Fig. 2 ist eine weitere Ausführungsform einer erfindungsgemäßen Vorrichtung zum Herstellen und Abfüllen eines Getränks mit darin gelöstem Gas dargestellt. Diese entspricht im Wesentlichen der Ausführungsform gemäß Fig. 1. Daher sind in Fig. 2 analoge Teile mit den gleichen Bezugszeichen versehen wie in Fig. 1, während die Abwandlungen betreffenden Bezugszeichen mit einem Strich versehen sind. Darüber hinaus wird die Ausführungsform gemäß Fig. 2 im Folgenden auch nur insoweit beschrieben werden, als sie sich von der Ausführungsform gemäß Fig. 1 unterscheidet, auf deren Beschreibung hiermit ansonsten ausdrücklich verwiesen sei.

Die Vorrichtung 20' zum Herstellen und Abfüllen eines Getränks 15 unterscheidet sich von der Vorrichtung 20 gemäß Fig. 1 lediglich dadurch, dass die Ausgangsflüssigkeit 24 nicht in zwei getrennten Schritten bzw. Anreicherungsvorrichtungen 32 und 44 mit Kohlendioxid und Sauerstoff angereichert wird, sondern in einer einzigen Anreicherungsvorrichtung 32'. Hierzu wird einem Mischer 33' über eine erste Leitung 34' Kohlendioxidgas und über eine zweite Leitung 46' Sauerstoffgas zugeführt. In dem Mischer 33' werden die beiden Gase in einem vorbestimmten Verhältnis miteinander gemischt, beispielsweise etwa 25 Vol.-% Sauerstoffgas zu etwa 75 Vol.-% Kohlendioxidgas. Das fertig gemischte Kohlendioxid-Sauerstoff-Gemisch wird dann der Anreicherungsvorrichtung 32' über eine Leitung 35' zugeführt.

## Patentansprüche

1. Verfahren zum Abfüllen eines aus einer Ausgangsflüssigkeit (24) hergestellten Getränks (15) mit darin gelöstem Gas in einen Getränkebehälter (10), umfassend die Schritte
- Befüllen des Getränkebehälters (10) mit dem Getränk (15) derart, dass über dem Getränk (15) in dem Getränkebehälter (10) ein vorbestimmtes Restgasvolumen (14) verbleibt, und
- Verschließen einer Behälteröffnung (12) des Getränkebehälters (10), wobei
in den Getränkebehälter (10) eine vorbestimmte Menge flüssigen Sauerstoffs eingeleitet und der Getränkebehälter (10) unmittelbar nach Einleiten des flüssigen Sauerstoffs verschlossen wird, **dadurch gekennzeichnet, dass** der Sauerstoff erst kurz vor der Zufuhr in den Getränkebehälter (10) in einem mit gasförmigem Sauerstoff und einem Kühlmedium, beispielsweise flüssigem Stickstoff, beschickten Wärmetauscher (66) verflüssigt wird.

2. Verfahren nach Anspruch 1,
**dadurch gekennzeichnet, dass** die vorbestimmte Menge flüssigen Sauerstoffs mindestens etwa 0,1 ml, vorzugsweise zwischen etwa 0,1 ml und etwa 3,0 ml, bevorzugter zwischen etwa 0,1 ml und etwa 1,5 ml, noch bevorzugter zwischen etwa 0,1 ml und etwa 1,0 ml, beträgt.

3. Verfahren nach Anspruch 1 oder 2,
**dadurch gekennzeichnet, dass** die in den Getränkebehälter (10) zuzuführende Menge flüssigen Sauerstoffs durch entsprechende Wahl der Öffnungszeit eines Ventils mit konstantem Durchlassquerschnitt bestimmt wird.

4. Verfahren nach einem der Ansprüche 1 bis 3,
**dadurch gekennzeichnet, dass** das in dem Getränk (15) gelöste Gas Sauerstoff oder ein Kohlendioxid-Sauerstoff-Gemisch umfasst.

5. Verfahren nach Anspruch 4,
**dadurch gekennzeichnet, dass** das Kohlendioxid-Sauerstoff Gemisch zwischen etwa 200 mg/l und etwa 500 mg/l, vorzugsweise zwischen etwa 200 mg/l und etwa 400 mg/l, Sauerstoff und zwischen etwa 1,0 g/l und etwa 4,0 g/l, vorzugsweise zwischen etwa 1,0 g/l und etwa 2,0 g/l, bevorzugter zwischen etwa 1,4 g/l und etwa 1,8 g/l, noch bevorzugter zwischen etwa 1,5 g/l und etwa 1,7 g/l, Kohlendioxid enthält.

6. Verfahren nach einem der Ansprüche 1 bis 5,
**dadurch gekennzeichnet, dass** die Ausgangsflüssigkeit (24) bereits mit Kohlendioxid angereichert worden ist, bevor sie mit Sauerstoff angereichert wird.

7. Verfahren nach Anspruch 6,
**dadurch gekennzeichnet, dass** die Ausgangsflüssigkeit (24) mit Kohlendioxid anreichert wird, ohne sie zuvor zu entgasen.

8. Verfahren nach einem der Ansprüche 1 bis 5,
**dadurch gekennzeichnet, dass** die Ausgangsflüssigkeit (24) mit einem Kohlendioxid-Sauerstoff-Gemisch angereichert wird.

9. Verfahren nach Anspruch 8,
**dadurch gekennzeichnet, dass** das Kohlendioxid-Sauerstoff-Gemisch zwischen etwa 2 Vol.-% und etwa 50 Vol.-% Sauerstoff und zwischen etwa 98 Vol.-% und etwa 50 Vol.-% Kohlendioxid enthält, vorzugsweise etwa 25 Vol.% Sauerstoff und etwa 75 Vol.-% Kohlendioxid.

10. Verfahren nach einem der Ansprüche 1 bis 9,
**dadurch gekennzeichnet, dass** die Ausgangsflüssigkeit (24) auf eine Temperatur von zwischen etwa 3 °C und etwa 9 °C, vorzugsweise etwa 6 °C, gekühlt wird, bevor sie mit Gas angereichert wird.

11. Verfahren nach einem der Ansprüche 1 bis 10,
**dadurch gekennzeichnet, dass** man den Getränkebehälter (10) mit einem Inertgas, beispielsweise Kohlendioxidgas, vorspannt, bevor man ihn mit dem Getränk (15) befüllt.

12. Verfahren nach Anspruch 11,
**dadurch gekennzeichnet, dass** der Vorspanndruck des Inertgases zwischen etwa 5,0 bar und etwa 8,0 bar, vorzugsweise zwischen etwa 6,5 bar und etwa 7,0 bar, beträgt.

13. Verfahren nach einem der Ansprüche 1 bis 12,
**dadurch gekennzeichnet, dass** die Ausgangsflüssigkeit (24) im Wesentlichen Wasser umfasst.

14. Verfahren nach einem der Ansprüche 1 bis 13,
**dadurch gekennzeichnet, dass** der Ausgangsflüssigkeit (24) wenigstens ein Inhaltsstoff zugesetzt wird.

15. Verfahren nach den Ansprüchen 6 und 14,
**dadurch gekennzeichnet, dass** der wenigstens eine Inhaltsstoff der Ausgangsflüssigkeit (24) zwischen der Anreicherung mit Kohlendioxid und der Anreicherung mit Sauerstoff zugesetzt wird.

16. Vorrichtung (20) zum Abfüllen eines aus einer Ausgangsflüssigkeit (24) hergestellten Getränks (15) mit darin gelöstem Gas in einen Getränkebehälter (10), zur Durchführung des Verfahrens nach einem Ansprüche 1 bis 16, umfassend
- eine Befüllvorrichtung (50), welche den Getränkebehälter (10) derart mit dem Getränk (15) befüllt, dass über dem Getränk (15) in dem Getränkebehälter (10) ein vorbestimmtes Restgasvolumen (14) verbleibt, und
- eine Verschließvorrichtung (74), welche den Getränkebehälter (10) verschließt, und
eine der Verschließvorrichtung (74) in Förderrichtung der Getränkebehälter (10) unmittelbar vorgeordnete Flüssigsauerstoff-Zuführvorrichtung (64), welche in den Getränkebehälter (10) eine vorbestimmte Menge flüssigen Sauerstoffs einleitet, **dadurch gekennzeichnet, dass** die Flüssigsauerstoff Zuführvorrichtung (64) einen Wärmetauscher (66) umfasst, der mit einer ersten Zuführleitung (68) zum Zuführen von gasförmigem Sauerstoff und zum anderen mit einer zweiten Zuführleitung (70) zum Zuführen von Kühlmedium, beispielsweise flüssigem Stickstoff, verbunden ist und den Sauerstoff erst kurz vor der Zufuhr in den Getränkebehälter verflüssigt.

17. Vorrichtung nach Anspruch 16,
**dadurch gekennzeichnet, dass** die Flüssigsauerstoff-Zuführvorrichtung (64) ein Ventil mit konstanten Durchlassquerschnitt umfasst, dessen Öffnungsdauer zeittaktbar ist.

18. Vorrichtung nach Anspruch 16 oder 17,
**dadurch gekennzeichnet, dass** das in dem Getränk (15) gelöste Gas Sauerstoff oder ein Kohlendioxid-Sauerstoff-Gemisch ist.

19. Vorrichtung nach Anspruch 18,
**dadurch gekennzeichnet, dass** eine erste Anreicherungsvorrichtung (32) zum Anreichern der Ausgangsflüssigkeit (24) mit Kohlendioxid und eine der ersten Anreicherungsvorrichtung (32) in Förderrichtung der Ausgangsflüssigkeit (24) nachgeordnete zweite Anreicherungsvorrichtung (44) zum Anreichern der Ausgangsflüssigkeit (24) mit Sauerstoff vorgesehen ist.

20. Vorrichtung nach Anspruch 18,
**dadurch gekennzeichnet, dass** eine Anreicherungsvorrichtung (32') zum Anreichern der Ausgangsflüssigkeit (24) mit einem Kohlendioxid-Sauerstoff-Gemisch vorgesehen ist.

21. Vorrichtung nach einem der Ansprüche 16 bis 20,
**dadurch gekennzeichnet, dass** eine Kühlvorrichtung (28) vorgesehen ist, welche die von einem Vorrat (22) kommende Ausgangsflüssigkeit (24) vor der Anreicherung mit Gas kühlt, vorzugsweise auf eine Temperatur von zwischen etwa 3 °C und etwa 9 °C, bevorzugter auf eine Temperatur von etwa 6 °C.

22. Vorrichtung nach einem der Ansprüche 16 bis 21,
**dadurch gekennzeichnet, dass** eine Vorspannvorrichtung (56) vorgesehen ist, welche den Getränkebehälter (10) vor der Befüllung mit dem Getränk (15) mit einem Inertgas, beispielsweise Kohlendioxidgas, vorspannt.

23. Vorrichtung nach Anspruch 22,
**dadurch gekennzeichnet, dass** der Vorspanndruck des Inertgases zwischen etwa 5,0 bar und etwa 8,0 bar, vorzugsweise zwischen etwa 6,5 bar und etwa 7,0 bar, beträgt.

24. Vorrichtung nach einem der Ansprüche 16 bis 23,
**dadurch gekennzeichnet, dass** eine Mischvorrichtung (38) vorgesehen ist, welche die Ausgangsflüssigkeit (24) mit wenigstens einem Inhaltsstoff vermischt.

25. Vorrichtung nach den Ansprüchen 19 und 24,
**dadurch gekennzeichnet, dass** die Mischvorrichtung (38) in Förderrichtung der Ausgangsflüssigkeit (24) zwischen der ersten Anreicherungsvorrichtung (32) und der zweiten Anreicherungsvorrichtung (44) angeordnet ist.

26. Vorrichtung nach einem der Ansprüche 16 bis 25,
**dadurch gekennzeichnet, dass** die Befüllvorrichtung (50) eine nach dem isobarometrischen Füllprinzip arbeitende Befüllvorrichtung ist.

## Claims

1. Method for filling a drinks container (10) with a drink (15) which is produced from an initial liquid (24) and has a gas dissolved therein comprising the steps of
- filling the drinks container (10) with the drink (15) in such a manner that a predetermined residual gas volume (14) remains above the drink (15) in the drinks container (10), and
- closing a container opening (12) of the drinks container (10),
a predetermined amount of liquid oxygen being introduced into the drinks container (10) and the drinks container (10) being closed directly after introduction of the liquid oxygen, **characterized in that** the oxygen is only liquefied in a heat exchanger (66) charged with gaseous oxygen and a cooling medium, for example liquid nitrogen, shortly before being fed into the drinks container (10).

2. Method according to Claim 1,
**characterized in that** the predetermined amount of liquid oxygen is at least about 0.1 ml, preferably between about 0.1 ml and about 3.0 ml, more preferably between about 0.1 ml and about 1.5 ml, still more preferably between about 0.1 ml and about 1.0 ml.

3. Method according to Claim 1 or 2,
**characterized in that** the amount of liquid oxygen to be fed into the drinks container (10) is determined by appropriate choice of the opening time of a valve of constant passage cross section.

4. Method according to one of Claims 1 to 3,
**characterized in that** the gas dissolved in the drink (15) comprises oxygen or a carbon dioxide-oxygen mixture.

5. Method according to Claim 4,
**characterized in that** the carbon dioxide-oxygen mixture comprises between about 200 mg/l and about 500 mg/l, preferably between about 200 mg/l and about 400 mg/l, of oxygen and between about 1.0 g/l and about 4.0 g/l, preferably between about 1.0 g/l and about 2.0 g/l, more preferably between about 1.4 g/l and about 1.8 g/l, still more preferably between about 1.5 g/l and about 1.7 g/l, of carbon dioxide.

6. Method according to one of Claims 1 to 5,
**characterized in that** the initial liquid (24) has already been enriched with carbon dioxide before it is enriched with oxygen.

7. Method according to Claim 6,
**characterized in that** the initial liquid (24) is enriched with carbon dioxide without degassing it in advance.

8. Method according to one of Claims 1 to 5,
**characterized in that** the initial liquid (24) is enriched with a carbon dioxide-oxygen mixture.

9. Method according to Claim 8,
**characterized in that** the carbon dioxide-oxygen mixture comprises between about 2% by volume and about 50% by volume of oxygen and between about 98% by volume and about 50% by volume of carbon dioxide, preferably about 25% by volume of oxygen and about 75% by volume of carbon dioxide.

10. Method according to one of Claims 1 to 9,
**characterized in that** the initial liquid (24) is cooled to a temperature of between about 3°C and about 9°C, preferably about 6°C, before it is enriched with gas.

11. Method according to one of Claims 1 to 10,
**characterized in that** the drinks container (10) is prepressurized with an inert gas, for example carbon dioxide gas, before it is filled with the drink (15).

12. Method according to Claim 11,
**characterized in that** the prepressurizing pressure of the inert gas is between about 5.0 bar and about 8.0 bar, preferably between about 6.5 bar and about 7.0 bar.

13. Method according to one of Claims 1 to 12,
**characterized in that** the initial liquid (24) essentially comprises water.

14. Method according to one of Claims 1 to 13,
**characterized in that** at least one constituent is added to the initial liquid (24).

15. Method according to Claims 6 and 14,
**characterized in that** the at least one constituent is added to the initial liquid (24) between the enrichment with carbon dioxide and the enrichment with oxygen.

16. Device (20) for filling a drinks container (10) with a drink (15) which is produced from an initial liquid (24) and has gas dissolved therein for carrying out the method according to one of Claims 1 to 15, comprising
- a filling device (50) which fills the drinks container (10) with the drink (15) in such a manner that a predetermined residual gas volume (14) remains in the drinks container (10) above the drink (15), and
- a closing device (74) which closes the drinks container (10), and a liquid oxygen feed device (64) which is disposed immediately upstream of the closing device (74) in the transport direction of the drinks containers (10) and which introduces a predetermined amount of liquid oxygen into the drinks container (10), **characterized in that** the liquid oxygen feed device (64) comprises a heat exchanger (66) which is connected to a first feed line (68) for feeding gaseous oxygen and secondly to a second feed line (70) for feeding cooling medium, for example liquid nitrogen and the oxygen is only liquefied shortly before being fed into the drinks container.

17. Device according to Claim 16,
**characterized in that** the liquid oxygen feed device (64) comprises a valve having constant passage cross section, the duration of opening of which valve can be controlled in time.

18. Device according to Claim 16 or 17,
**characterized in that** the gas dissolved in the drink (15) is oxygen or a carbon dioxide-oxygen mixture.

19. Device according to Claim 18,
**characterized in that** a first enrichment device (32) is provided for enriching the initial liquid (24) with carbon dioxide and a second enrichment device (44) is provided for enriching the initial liquid (24) with oxygen which is disposed downstream of the first enrichment device (32) in the transport direction of the initial liquid (24).

20. Device according to Claim 18,
**characterized in that** an enrichment device (32') is provided for enriching the initial liquid (24) with a carbon dioxide-oxygen mixture.

21. Device according to one of Claims 16 to 20,
**characterized in that** a cooling device (28) is provided which cools the initial liquid (24) coming from a reservoir (22) before the enrichment with gas preferably to a temperature of between about 3°C and about 9°C, more preferably to a temperature of about 6°C.

22. Device according to one of Claims 16 to 21,
**characterized in that** a prepressurizing device (56) is provided which prepressurizes the drinks container (10), before it is filled with the drink (15), with an inert gas, for example carbon dioxide gas.

23. Device according to Claim 22,
**characterized in that** the prepressurizing pressure of the inert gas is between about 5.0 bar and about 8.0 bar, preferably between about 6.5 bar and about 7.0 bar.

24. Device according to one of Claims 16 to 23,
**characterized in that** a mixing device (38) is provided which mixes the initial liquid (24) with at least one constituent.

25. Device according to Claims 19 and 24,
**characterized in that** the mixing device (38) is disposed between the first enrichment device (32) and the second enrichment device (44) in the transport direction of the initial liquid (24).

26. Device according to one of Claims 16 to 25,
**characterized in that** the filling device (50) is a filling device operating according to the isobarometric filling principle.

## Revendications

1. Procédé de soutirage d'une boisson (15), réalisée à partir d'un liquide de base (24) et contenant un gaz dissous, dans un récipient pour boisson (10), comportant les étapes :
- remplissage du récipient pour boisson (10) avec la boisson (15), de telle sorte qu'un volume de gaz résiduel (14) prédéfini subsiste dans le récipient pour boisson (10) au-dessus de la boisson (15), et
- fermeture d'une ouverture de remplissage (12) du récipient pour boisson (10),
une quantité prédéterminée d'oxygène liquide étant introduite dans le récipient pour boisson (10) et le récipient pour boisson (1C) étant fermé immédiatement après l'introduction de l'oxygène liquide,
**caractérisé en ce que** l'oxygène est liquéfié, juste avant l'introduction dans le récipient pour boisson (10), dans un échangeur thermique (66) contenant de l'oxygène gazeux et un fluide de refroidissement, tel que l'azote liquide.

2. Procédé selon la revendication 1, **caractérisé en ce que** la quantité prédéterminée d'oxygène liquide est au moins de l'ordre de 0,1 ml environ, de préférence entre 0,1 ml environ et 3,0 ml environ, de manière plus préférée entre 0,1 ml environ et 1,5 ml environ, de manière encore plus préférée entre 0,1 ml environ et 1,0 ml environ.

3. Procédé selon la revendication 1 ou 2, **caractérisé en ce que** la quantité d'oxygène liquide à acheminer dans le récipient pour boisson (10) est déterminée par un choix approprié de la durée d'ouverture d'une vanne avec une section de passage constante.

4. Procédé selon l'une quelconque des revendications 1 à 3, **caractérisé en ce que** le gaz dissous dans la boisson (15) contient de l'oxygène ou un mélange d'oxygène et de dioxyde de carbone.

5. Procédé selon la revendication 4, **caractérisé en ce que** le mélange d'oxygène et de dioxyde de carbone contient entre environ 200 mg/l et environ 500 mg/l, de préférence entre environ 200 mg/l et environ 400 mg/l d'oxygène et entre environ 1,0 g/l et environ 4,0 g/l, de préférence entre environ 1,0 g/l et environ 2,0 g/l, de manière plus préférée entre environ 1,4 g/l et environ 1,8 g/l, de manière encore plus préférée entre environ 1,5 g/l et environ 1.7 g/l de dioxyde de carbone

6. Procédé selon l'une quelconque des revendications 1 à 5, **caractérisé en ce que** le liquide de base (24) a déjà été enrichi en dioxyde de carbone avant d'être enrichi en oxygène.

7. Procédé selon la revendication 6, **caractérisé en ce que** le liquide de base (24) est enrichi en dioxyde de carbone sans dégazage préalable.

8. Procédé selon l'une quelconque des revendications 1 à 5, **caractérisé en ce que** le liquide de base (24) est enrichi avec un mélange d'oxygène et de dioxyde de carbone.

9. Procédé selon la revendication 8, **caractérisé en ce que** le mélange d'oxygène et de dioxyde de carbone contient entre environ 2 % en volume et environ 50 % en volume d'oxygène et entre environ 98 % en volume et environ 50 % en volume de dioxyde de carbone, de préférence environ 25 % en volume d'oxygène et environ 75 % en volume de dioxyde de carbone.

10. Procédé selon l'une quelconque des revendications 1 à 9, **caractérisé en ce que** le liquide de base (24), avant d'être enrichi en gaz, est refroidi à une température entre environ 3°C et environ 9°C, de préférence environ 6°C.

11. Procédé selon l'une quelconque des revendications 1 à 10, **caractérisé en ce que** l'on précontraint le récipient pour boisson (10) avec un gaz inerte, tel que le gaz de dioxyde de carbone, avant de le remplir avec la boisson (15).

12. Procédé selon la revendication 11, **caractérisé e**n ce que la pression de précontrainte du gaz inerte est située entre environ 5,0 bar et environ 8,0 bar, de préférence entre environ 6,5 bar et environ 7,0 bar.

13. Procédé selon l'une quelconque des revendications 1 à 12, **caractérisé en ce que** le liquide de base (24) comporte pour l'essentiel de l'eau.

14. Procédé selon l'une quelconque des revendications 1 à 13. **caractérisé en ce qu'**au moins une substance est ajoutée au liquide de base (24).

15. Procédé selon les revendications 6 et 14, **caractérisé en ce que** ladite au moins une substance du liquide de base (24) est ajoutée entre l'enrichissement avec le dioxyde de carbone et l'enrichissement avec l'oxygène.

16. Dispositif (20) de soutirage d'une boisson (15), réalisée à partir d'un liquide de base (24) et contenant un gaz dissous, dans un récipient pour boisson (10), destiné à la mise en oeuvre du procédé selon l'une quelconque des revendications 1 à 15, comportant :
un dispositif de remplissage (50), par lequel le récipient pour boisson (10) est rempli avec la boisson (15), de telle sorte qu'un volume de gaz résiduel (14) prédéfini subsiste dans le récipient pour boisson (10) au-dessus de la boisson (15), et
- un dispositif de fermeture (74), qui terme le récipient pour boisson (10), et
- un dispositif d'acheminement d'oxygène liquide (64), monté directement en amont du dispositif de fermeture (74) par référence au sens de transport du récipient pour boisson (10), par lequel une quantité prédéterminée d'oxygène liquide est introduite dans le récipient pour boisson (10),
**caractérisé en ce que** le dispositif d'acheminement d'oxygène liquide (64) comporte un échangeur thermique (66), qui est relié à une première conduite d'admission (68) pour l'acheminement de l'oxygène gazeux et, en outre, à une deuxième conduite d'admission (70) pour l'acheminement d'un fluide de refroidissement, tel que l'azote liquide, et liquéfie l'oxygène juste avant son introduction dans le récipient pour boisson (10).

17. Dispositif selon la revendication 16, **caractérisé en ce que** le dispositif d'acheminement d'oxygène liquide (64) comporte une vanne avec une section de passage constante, dont la durée d'ouverture peut être synchronisée.

18. Dispositif selon la revendication 16 ou 17, **caractérisé en ce que** le gaz dissous dans la boisson (15) contient de l'oxygène ou un mélange d'oxygène et de dioxyde de carbone.

19. Dispositif selon la revendication 18, **caractérisé en ce qu'**il est prévu un premier dispositif d'enrichissement (32) pour l'enrichissement du liquide de base (24) avec le dioxyde de carbone et un deuxième dispositif d'enrichissement (44), monté en aval du premier dispositif d'enrichissement (32) par référence au sens de transport du liquide de base (24), et destiné à l'enrichissement du liquide de base (24) avec l'oxygène.

20. Dispositif selon la revendication 18, **caractérisé en ce qu'**il est prévu un dispositif d'enrichissement (32') pour l'enrichissement du liquide de base (24) avec un mélange d'oxygène et de dioxyde de carbone.

21. Dispositif selon l'une quelconque des revendications 16 à 20, **caractérisé en ce qu'**il est prévu un dispositif de refroidissement (28), par lequel le liquide de base (24), sortant d'une réserve (22), est refroidi avant l'enrichissement avec le gaz, de préférence à une température entre environ 3°C et environ 9°C, de préférence à une température d'environ 6°C.

22. Dispositif selon l'une quelconque des revendications 16 à 21, **caractérisé en ce qu'**il est prévu un dispositif de précontrainte (56), par lequel le récipient pour boisson (10) est précontraint avec ur gaz inerte, tel que le gaz de dioxyde de carbone, avant qu'il soit rempli avec la boisson (15).

23. Dispositif selon la revendication 22, **caractérise en ce que** la pression de précontrainte du gaz inerte est située entre environ 5,0 bar et environ 8,0 bar, de préférence entre environ 6,5 bar et environ 7,0 bar.

24. Dispositif selon l'une quelconque des revendications 16 à 23, **caractérisé en ce qu'**il est prévu un dispositif de brassage (38), par lequel le liquide de base (24) est mélangé à au moins une substance.

25. Dispositif selon les revendications 19 et 24, **caractérisé en ce que** le dispositif de brassage (38) est monté, dans le sens de transport du liquide de base (24), entre le premier dispositif d'enrichissement (32) et le deuxième dispositif d'enrichissement (44).

26. Dispositif selon l'une quelconque des revendications 16 à 25, **caractérisé en ce que** le dispositif de remplissage (50) est ur dispositif de remplissage fonctionnant selon le principe de remplissage isobarométrique.
